# EUROPEAN PATENT SPECIFICATION

(11) **EP 2 901 609 B1**
(45) Date of publication and mention of the grant of the patent: **14.06.2017**
(21) Application number: 13840872.9
(22) Date of filing: 13.09.2013
(51) Int. Cl.: H04W 74/00, H04W 48/12, H04L 5/00, H04L 27/26

(54) **SYSTEMS AND METHOD FOR REPORTING DOWNLINK CONTROL CHANNEL INFORMATION IN A WIRELESS COMMUNICATION SYSTEM**
SYSTEME UND VERFAHREN ZUR MELDUNG VON DOWNLINK-STEUERKANALINFORMATIONEN IN EINEM DRAHTLOSEN KOMMUNIKATIONSSYSTEM
SYSTÈMES ET PROCÉDÉ DE RAPPORT D'INFORMATIONS DE CANAL DE COMMANDE DE LIAISON DESCENDANTE DANS UN SYSTÈME DE COMMUNICATION SANS FIL

(30) Priority: 28.09.2012 US 201261707093 P
(43) Date of publication of application: 05.08.2015
(73) Proprietor: Telefonaktiebolaget LM Ericsson (publ), 164 83 Stockholm (SE)
(72) Inventor: NAMMI, Sairamesh, S-164 48 Stockholm (SE)
(74) Representative: Brann AB
(86) International application number: PCT/SE2013/051067
(87) International publication number: WO 2014/051497

(56) References cited:
- PHILIPS ET AL: "Coding of HS-SCCH to support FDD MIMO", 3GPP DRAFT; R1-071165 CR24212-0241R4 (REL7,B), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. St. Louis, USA; 20070218, 18 February 2007 (2007-02-18), XP050105145, [retrieved on 2007-02-18]
- HUAWEI ET AL: "HS-SCCH design for 4-branch MIMO", 3GPP DRAFT; R1-122683 HS-SCCH DESIGN FOR DL 4-BRANCH MIMO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech Republic; 20120521 - 20120525, 12 May 2012 (2012-05-12), XP050600868, [retrieved on 2012-05-12]
- ERICSSON: "HS-SCCH Design for Four Branch MIMO System", 3GPP DRAFT; R1-121757 HS-SCCH DESIGN FOR FOUR BRANCH MIMO SYSTEM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jeju, South Korea; 20120326 - 20120330, 20 March 2012 (2012-03-20), XP050600008, [retrieved on 2012-03-20]
- ERICSSON: "Rate Matching for HS-SCCH Part I for Four Branch MIMO System", 3GPP DRAFT; R1-123755 RATE MATCHING FOR HS-SCCH DESIGN FOR FOUR BRANCH MIMO SYSTEM, 3RD GENERATION PARTNERSHIP PROJECT (3GPP), MOBILE COMPETENCE CENTRE ; 650, ROUTE DES LUCIOLES ; F-06921 SOPHIA-ANTIP , vol. RAN WG1, no. Qingdao; 20120813 - 20120817 5 August 2012 (2012-08-05), XP050661615, Retrieved from the Internet: URL:http://www.3gpp.org/ftp/tsg_ran/WG1_RL 1/TSGR1_70/Docs/ [retrieved on 2012-08-05]
- ETSI: "Universal Mobile Telecommunications System (UMTS); Multiplexing and channel coding (FDD) (3GPP TS 25.212 version 11.3.0 Release 11)", ETSI TS 125 212 V11.3.0 (2012-09), 1 September 2012 (2012-09-01), XP055189839,
- 'Technical Specification Group Radio Access Network; Multiplexing and channel coding (FDD)' 3GPP TS 25.212 V11.3.0 19 September 2012, SOPHIA-ANTIPOLIS CEDEX ; FRANCE, XP055189839 Retrieved from the Internet: <URL:http://www.3gpp.org/ftp/Specs/archive/ 25_ series/25.212/25212-b30.zip> [retrieved on 2014-03-14]
- ERICSSON: 'Introduction of 4Tx_HSDPA' 3GPP TSG-RAN1 MEETING #70, R1-124505 05 August 2012, QINGDAO, P. R. OF CHINA, XP050662435
- ERICSSON: 'HS-SCCH Design for Four Branch MIMO System' 3GPP TSG-RAN WG1 #68BIS, R1-121757 20 March 2012, JEJU, SOUTH KOREA, XP050600008
- HUAWEI, HISILICON: 'HS-SCCH design for 4-branch MIMO' 3GPP TSG-RAN WG1 MEETING #69, R1-122683 12 May 2012, PRAGUE, CZECH REPUBLIC, XP050600868
- ALCATEL-LUCENT ET AL.: 'Pilot design for 4-branch HSDPA' 3GPP TSG RAN WG1 MEETING #68, R1-120475 31 January 2012, DRESDEN, GERMANY, XP050562958
- HUAWEI, HISILICON: 'Further discussion on HS-SCCH design' 3GPP TSG-RAN WG1 MEETING #70, R1-123816 05 August 2012, QINGDAO, CHINA, XP050661669

## Description

### TECHNICAL FIELD

The field of the present disclosure is that of reporting downlink control channel information in a wireless communication system, such as, a heterogeneous wireless communication system that employs dedicated pilot signals.

### BACKGROUND

Recently, cellular network operators have started to offer mobile broadband networks based on Wideband Code Division Multiple Access (WCDMA) and High Speed Packet Access (HSPA). The amount of traffic that needs to be handled by these networks is growing significantly. Therefore, techniques that allow cellular network operators to manage their spectrum resources more efficiently are of large importance.

Ways to improve downlink performance include supporting: 4-branch MIMO, multiflow communication, multi carrier deployment etc. Because improvements in spectral efficiency per link are approaching theoretical limits, the next generation technology aims to improve the spectral efficiency per unit area. Currently, the 3^{rd} Generation Partnership Project (3GPP) has been working on this aspect using so called "heterogeneous" networks, as opposed to "homogeneous" networks.

A homogeneous network is a network of base stations (e.g., Node Bs) in a planned layout in which all base stations have similar transmit power levels, antenna patterns, receiver noise floors, and similar backhaul connectivity to the data network. Moreover, all base stations offer unrestricted access to user terminals in the network, and serve roughly the same number of user terminals. Current wireless system comes under this category for example GSM, WCDMA, HASDPA, LTE ,Wimax. Etc.

A heterogeneous network is a network that includes more than one type of base station. For example, a heterogeneous network may include "high" power base stations (a.k.a., "macro" base stations) (e.g., base stations that may consume in the range of about 2 kW) and "low" power base stations (e.g., pico/femto/relay base stations) (a.k.a., low power nodes (LPNs)) that consume much less power than macro base station (e.g., a typical LPN may consume not more than about 2 W).

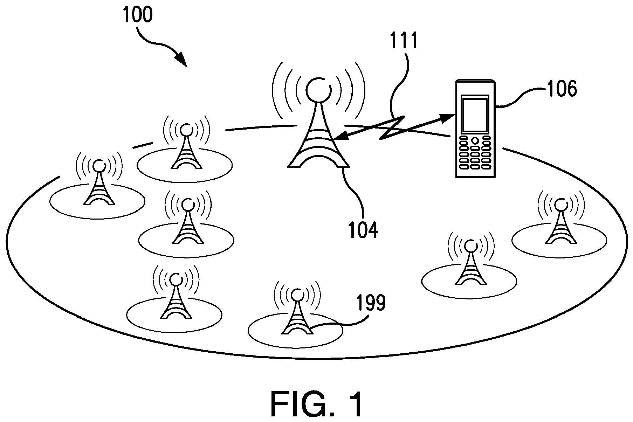

FIG. 1 illustrates schematically a universal mobile telecommunications system, UMTS, heterogeneous network 100. As shown in FIG. 1, network 100 includes a macro base station 104 (e.g., a Node B) that is responsible for a given geographical radio cell. As also shown in FIG. 1, LPNs 199 may be deployed to fill coverage holes and, thereby, improve network capacity. Due to their lower transmit power and smaller physical size, LPNs 199 may be deployed in home, offices, cafes, etc. FIG. 1 also illustrates a communication device 106 (a.k.a., user equipment (UE)) connected to a serving base station (in this case the macro node 104 is the serving base station) via a respective air interface 111. Communication between the nodes in the network 100 (e.g., LPNs 199 or macro node 104) and the UE 106 may follow protocols specified by 3GPP HSPA specifications.

The introduction of LPNs in a homogenous network requires new pilot signals to be transmitted by the base stations. Generally, a pilot signal is a signal carrying a known bit sequence that is transmitted at a known power. One solution is to use the same principle as that of macro base station, where common pilot signals (e.g., common pilot signals transmitted through a primary common pilot channel (P-CPICH) and secondary CPICH (S-CPICH)) are used for estimating channel state information as well as for data demodulation. Common pilot signals are typically broadcast by base stations and are intended to be used by any user equipment (UE) to, for example, estimate the channel between the base station and the UE (e.g., determine channel state information).

Another solution is to use common pilot signals to enable estimating channel state information as well as dedicated pilot signals for data modulation. Unlike common pilot signals, dedicated pilot signals are precoded with beamforming matrices at the base station. This approach may result in beamforming gains while reducing the interference to the other users in the cell. This is due to the fact that the dedicated pilot signals are precoded with the beamforming matrices at the base station.

A key characteristic of HSPA is the use of shared-channel transmission in the downlink, which implies that a certain fraction of the total downlink radio resources available within a cell, channelization code sets, and transmission power may be seen as a common resource that is dynamically shared between users, primarily in the time domain. The use of shared channel transmission on a downlink shared channel (DSCH), which in WCDMA and other systems is implemented through the High-Speed Downlink Shared Channel (HS-DSCH), enables the possibility to rapidly allocate a large fraction of the downlink resources for transmission of data to a specific user. The HS-DSCH may be associated with a group of channelization code sets. Each such channelization code set is also known as a High-Speed Physical Downlink Shared Channel (HS-PDSCH). When a base station (e.g., a NodeB or other base station) has data to send to a particular UE, the NodeB must first schedule the UE (i.e., allocate to the UE an HS-PDSCH) and then use the allocated HS-PDSCH to transmit the data to the UE. Dynamic allocation of the HS-PDSCH for transmission to a specific user maybe done on a 2ms transmission-time-interval (TTI).

Downlink control signaling is necessary for the operation of HS-DSCH. For example, the identity of the UE that is being scheduled must be signaled to the UE along with an identification of the HS-PDSCH so that the UE will know that the base station will soon be transmitting data for the UE and will know the physical channel (e.g., code set) that is being used to send the data. The UE also needs to be informed about other parameters (e.g., the transport format used for the data transmission as well as other information). This downlink control signaling is carried on the High-Speed Shared Control Channel (HS-SCCH), which may be transmitted in a parallel to the HS-DSCH using a separate channelization code set. The HS-SCCH is a shared channel.

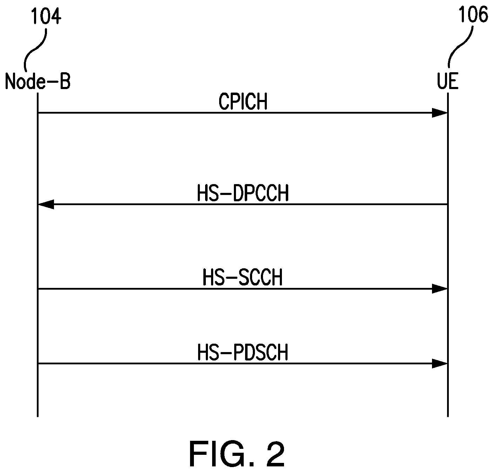

Referring now to FIG. 2, FIG. 2 shows an example message exchange between a NodeB 104 and a UE 106 in a HSPA system 100 that uses common pilot signals only. As shown in FIG. 1, the NodeB 104 transmits a pilot signal on a common pilot channel (e.g., the CPICH). The UE receives the pilot signal and uses it to compute channel quality information (CQI) and a precoding channel indicator. This information along with other information (e.g., hybrid automatic repeat request (HARQ) acknowledgement/negative acknowledgement (ACK/NAK)) is reported to the NodeB using, for example a high speed dedicated physical control channel (HS-DPCCH). The NodeB then schedules the UE for a downlink transmission and decides on the parameters for the transmission including: the HS-PDSCH, modulation and rank information (RI) (number of transport blocks), and precoding weight information (also known as precoding index (PCI)). This control information is sent to the UE using the HS-SCCH. After the control information is transmitted using HS-SCCH, the data is transmitted using the selected HS-PDSCH. "Coding of HS-SCCH to support FDD MIMO", 3GPP DRAFT; describes coding of HS-SCCH for MIMO.

Use of dedicated pilot signals requires a control channel structure that is different than the one used in a network that uses common pilot signals only. Accordingly, what is desired is an efficient method to report control channel information when dedicated pilot signals are deployed.

### SUMMARY

In one aspect, the invention relates to an improved process for encoding control information transmitted to a UE from a base station when dedicated pilot signals are employed. In some embodiments, the process may begin with the base station obtaining data intended for the UE (e.g., either receiving or generating the data). The base station obtains (e.g., selects and/or determines) control information for use in transmitting the data to the UE on a shared data channel (e.g., HS-DSCH). This step may occur after a scheduler of the base station selects the UE from a set of UEs that the base station is serving. The obtained control information may include: information identifying a channelization code set (CCS), rank information (RI), and modulation information (MI) (e.g., a modulation scheme), where each has a corresponding bit sequence. The bit sequences are multiplexed (e.g., combined) to produce a bit sequence X1.

According to the appended claims, X1 is 10 bits. In these embodiments, the first portion of X1 (e.g., the first seven bits of X1) identifies a CCS and the next three bits of X1 identifies RI and MI. Next, X1 is padded with bit sequence P (in some embodiments P is eight bits in length) to produce bit sequence X1'. Bit sequence X1' is convolution encoded to produce encoded bit sequence Z1. Depending on the length of X1' and on the rate of the convolutional encoder, Z1 may be, for example, 54 bits. For example, when X1' is 18 bits and the rate is 1/3, then Z1=54bits. The encoded bits Z1 are then punctured by a rate matcher to produce bit sequence R1 (in some embodiments Z1 is punctured such that R1 is 40 bits in length). In some embodiments, the encoded bits R1 are bit-masked with a UE specific sequence (UESS) (which may be generated by an encoder that encodes a 16-bit UE ID using a (40, 16) punctured convolutional code with rate 1/2) to produce a bit sequence S1 (in some embodiments S1 = 40bits). For example, in some embodiments, UESS and R1 may be XORd by a logic circuit to produce S1. In some embodiments, S1 is then spread by spreading factor 128, QPSK modulated, and transmitted in one slot. In one particular embodiment, when the rate is 1/3 the following puncturing pattern is used by the rate matcher to end puncture Z1 to produce R1: [1 2 3 4 5 6 7 48 49 50 51 52 53 54]. That is, bits 1, 2, 3, 4, 5, 6, 7, 48, 49, 50, 51, 52, 53, and 54 are removed from Z1 by rate matcher to produce R1.

In another aspect, the invention relates to an improved base station configured to use dedicated pilot signals to assist a UE in demodulating data transmitted by the base station to the UE. In some embodiments, the improved base station includes a transmitter and an encoding unit for encoding control information to send to the UE. The control information comprises: information identifying a channelization code set, CCS, rank information, RI, and modulation information, MI. The encoding unit is configured to: multiplex bit sequences corresponding to the control information, thereby producing a bit sequence, X1, wherein: X1 is ten bits in length, the first seven bits of X1 identify the CCS, and the remaining bits of X1 identify the RI and MI.

The first portion of X1 (e.g., the first seven bits of X1) identify a CCS and the remainder of X1 (e.g., the next three bits) identifies an RI/MI pair. The base station may also include a padder that pads X1 with bit sequence P (in some embodiments P is eight bits in length) to produce bit sequence X1'. The base station also includes a convolutional encoder that convolution encodes X1' to produce encoded bit sequence Z1. The encoded bits Z1 are then punctured by a rate matcher to produce bit sequence R1 (in some embodiments Z1 is punctured such that R1 is 40 bits in length and an end puncturing pattern is used). In some embodiments, the base station also includes a logic circuit configured to bit-mask R1 with a UE specific sequence (UESS) (which may be generated by an encoder that encodes a 16-bit UE ID using a (40, 16) punctured convolutional code with rate 1/2) to produce a bit sequence S1 (in some embodiments S1 = 40bits). For example, in some embodiments, UESS and R1 may be XORd by logic circuit to produce S1. Base station also includes a transmitter that then spreads, modulates and transmits S1 in one slot.

The base station may also include a receiver for receiving data intended for a UE and/or a data generator for generating data intended for the UE. The base station may further include a scheduler for selecting the UE from a set of UEs that the base station is serving and for obtaining (e.g., selecting and/or determining) control information for use in transmitting the received or generated data to the UE on a shared data channel (e.g., HS-DSCH).

### BRIEF DESCRIPTION OF THE DRAWINGS

FIG. 1 illustrates an example heterogeneous network.
FIG. 2 is an example signaling diagram.
FIG. 3 is a diagram of a common pilot signal only system.
FIG. 4 is a diagram of a dedicated pilot signal system.
FIG. 5 is an example signalling diagram.
FIG. 6 illustrates an exemplary control channel structure.
FIG. 7 illustrates an example encoding structure.
FIG. 8 shows simulation results for a first embodiment.
FIG. 9 illustrates an example encoding structure.
FIG. 10 shows simulation results for a first embodiment.
FIG. 11 is a block diagram illustrating an example encoding scheme according to some embodiments.
FIG. 12 is a block diagram illustrating an example encoding scheme according to other embodiments.
FIG. 13 is a flow chart illustrating a process according to some embodiments.
FIG. 14 is a functional block diagram of a base station according to some embodiments.
FIG. 15 is a block diagram of an example base station.
FIG. 16 is a block diagram of an example UE.

### DETAILED DESCRIPTION OF EMBODIMENTS

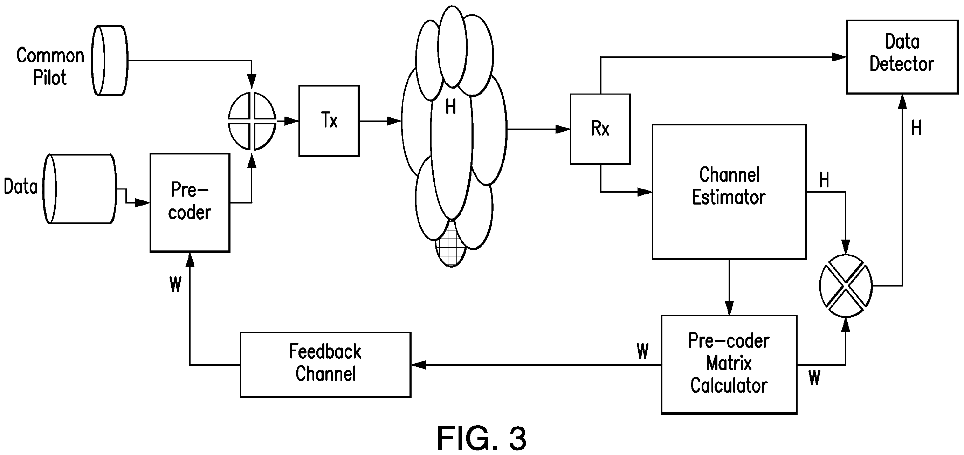

As mentioned above, some networks employ only common pilot signals, while others employ both common and dedicated (e.g., precoded) pilot signals. FIG. 3 shows the conceptual diagram of the common pilot signal design system. The base station 104 transmitter 302 transmits a known pilot signal (e.g., known symobls) continuously for channel sounding. The UE 106 estimates channel quality (typically SINR) from channel sounding, and computes a preferred precoding control index (PCI), rank information (RI), and channel quality information (CQI) for the next downlink transmission. This information is conveyed to the base station through a feedback channel. The base station processes this information and decides the precoding matrix and CQI and some other parameters such as transport block size etc. and conveys this information to the UE through downlink control channel. For data transmissions, known pilot signals are sent without precoding and the data is precoded with the chosen precoding matrix. The UE receiver estimates the channel for data demodulation from the pilot signal. This signal flow sequence is shown in FIG. 2.

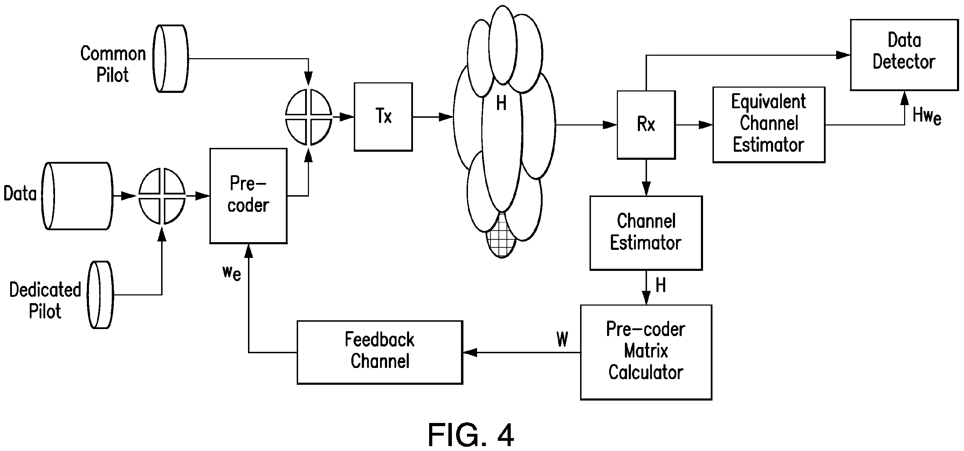

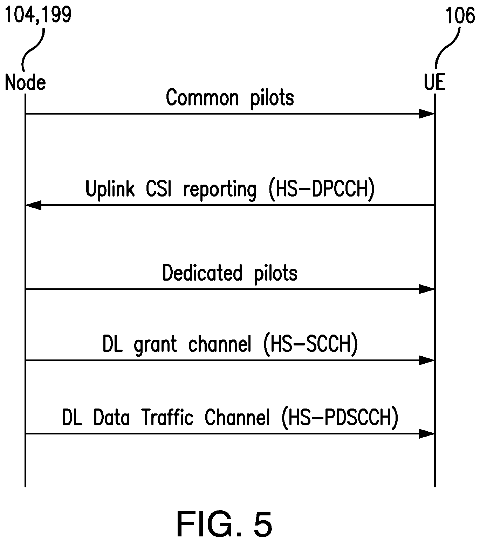

FIG. 4 shows the system diagram for the common plus dedicated pilot signals scheme. Similar to the common pilot signal only scheme, known pilot symbols are used for channel sounding. The UE conveys the preferred PCI, RI, CQI through the feedback channel. For downlink data transmission, the base station uses this information to choose the transmission parameters for next downlink transmission. Next, both certain pilot symbols and the data intended for the UE are multipled by the precoding matrix selected by the base station and transmitted. The UE estimates the effective channel (i.e., the channel multiplied by the precoding matrix/vector) and demodulates the data. This signal flow sequence is shown in FIG. 5.

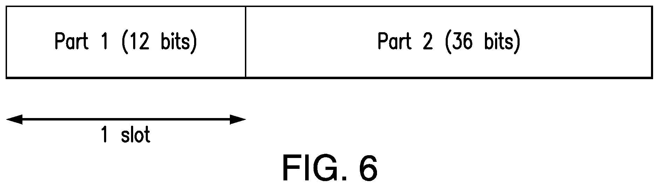

Requirements on different parts of the control information that need to be available to the UE have affected the detailed structure of the HS-SCCH. For UE complexity reasons, it is beneficial if the channelization code set is known to the UE prior to the start of the data transmission on the HS-DSCH. Otherwise the UE would have to buffer the received signal prior to dispreading or, alternatively, despread all potential HS-DSCH code sets. On the other hand, the transport block size and other information are only needed at HS-DSCH decoding/soft combining, which usually does not start until the end of the HS-DSCH TTI. Thus, the HS-SCCH information is split into two parts, part 1 and part 2. For a 2 branch multiple-input and multiple-output (MIMO) system that employs common pilot signals only, part 1 consists of 12 bits. These 12 bits convey information about: the channelization code set (CCS) (7 bits), the modulation scheme (3 bits), and the precoding weight information (PCI) (2 bits). RI is implicitly informed through the modulation information (MI) (i.e., the modulation scheme). Part 2 consists of 36 bits, out of which 6 bits for each transport block, 4 bits for HARQ process, 4 bits for redundancy version for the two streams and 16 bits for the identity, ID, of the UE. For single stream transmission, only 28 bits are needed for part 2 information. FIG. 6 illustrates an exemplary two-part HS-SCCCH structure.

### Proposed Structure for the Control Channel when Dedicated Pilot signals are Employed

Similar to the control channel structure for the common pilot signal only scheme, the control channel structure for the common pilot signal plus dedicated pilot signal scheme (a.k.a., dedicated pilot signal scheme, for short) also has two parts: part 1 and part 2. For part 2 we propose using the same structure that is used for the common pilot signal only scheme, which is described above. For dedicated pilot signal scheme, there is no need to inform the UE of the precoding control index (PCI) selected by the base station because the base station (e.g., macro or LPN) can use the beamforming vectors as PCI. For part 1, then, we propose the following control channel structure for one example and one embodiment ("example I"): CCS (7 bits), RI (1 bit), MI (4 bits). For other embodiments ("embodiment I"), the following structure may be used: CCS (7 bits); RI/MI (3 bits). In this second embodiment, we rank information and modulation are coupled for each HARQ process so as to reduce the number of bits reported to the UE.

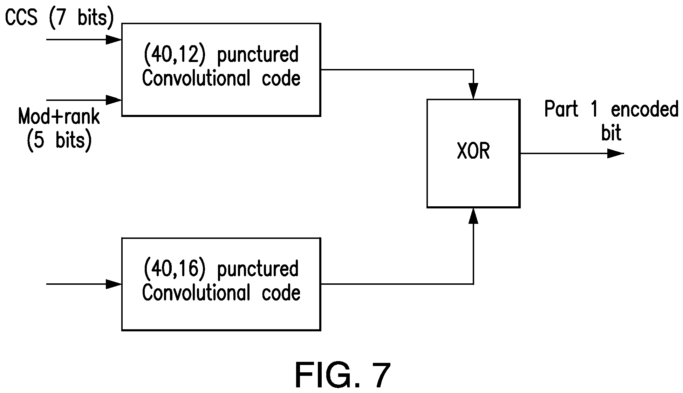

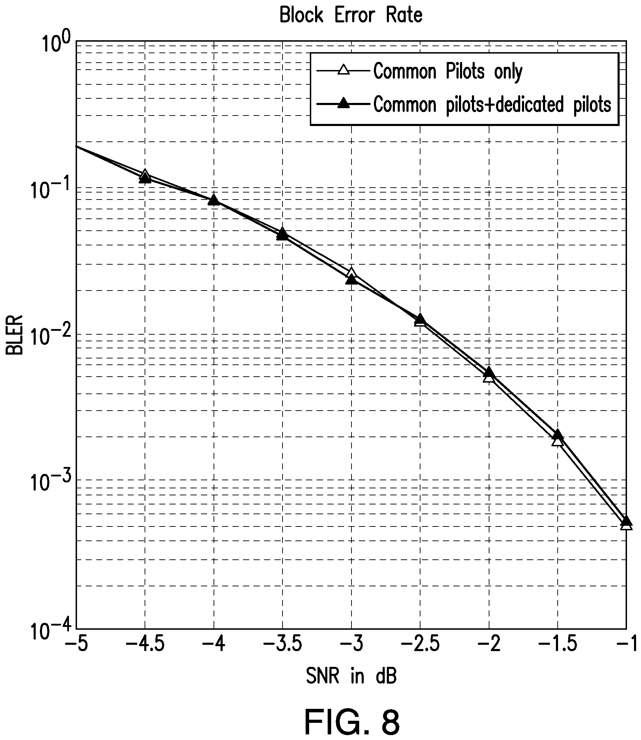

FIG. 7 shows an example encoder structure for example I. It can be seen that the part 1 carries CCS information (7 bits) and rank and modulation information (5 bits). The UE identity may also be signaled in part 1 through a UE-specific mask applied to the part 1 encoded sequence. First the CCS, RI and MI bits (12 bits total) are encoded by a (40,12) punctured convolutional code with rate 1/3. These encoded bits are bit-masked with a UE specific sequence that may be generated by encoding a 16-bit UE identifier using a (40, 16) punctured convolutional code with rate 1/2. These 40 encoded bits are then spread by spreading factor (e.g., a spreading factor of 128), modulated (e.g., QPSK modulated), and transmitted (e.g., transmitted in one slot). A possible puncturing pattern for example I is: [1 2 3 4 5 6 7 8 9 10 51 52 53 54 55 56 57 58 59 60]. FIG. 8 shows the BLER for different operating SNR in dB. It can be seen that there is no gain from the common pilot signal only solution as both are using 12 bits, however with dedicated pilot signals there is a possibility of getting extra gain in terms of downlink throughput.

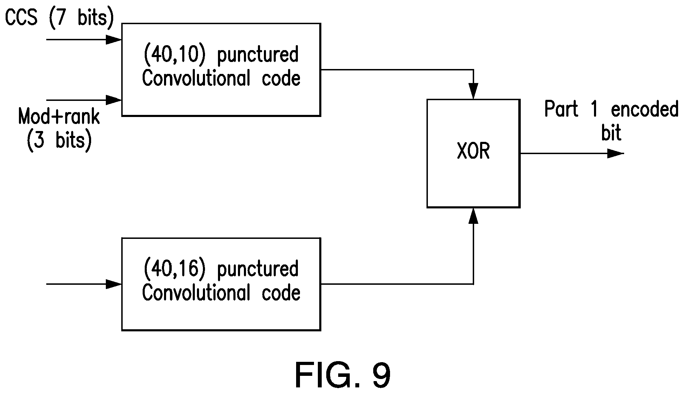

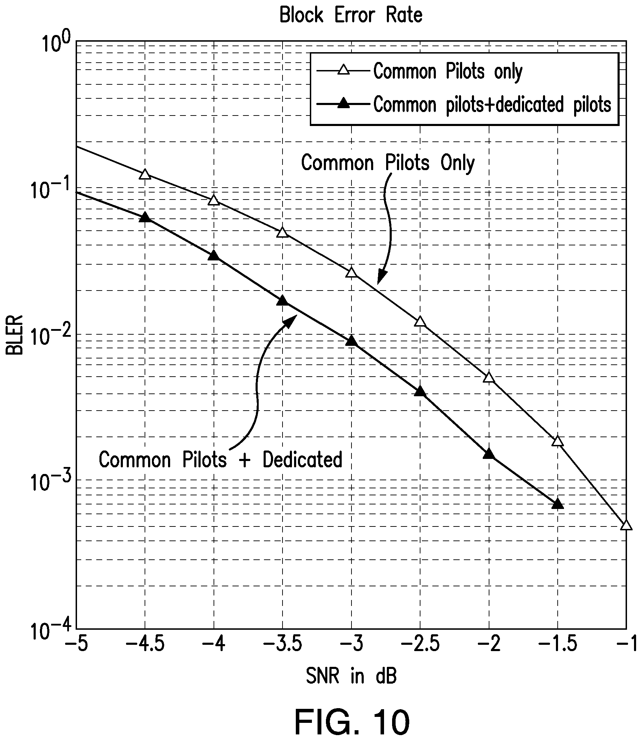

FIG. 9 shows an example encoder structure for embodiment I. It can be seen that the part 1 carries CCS information (7 bits) and modulation and rank information (3 bits). The UE identity may also be signaled in part 1 through a UE-specific mask applied to the part 1 encoded sequence. As shown, the modulation index rank information and code allocation are encoded by a (40,10) punctured convolutional code with rate 1/3. These encoded bits are bit-masked with a UE specific sequence which may be generated by encoding the 16-bit UE ID using a (40, 16) punctured convolutional code with rate 1/2. These 40 part 1 encoded bits may be spread by spreading factor 128, QPSK modulated, and transmitted in one slot. A possible puncturing pattern for embodiment I is: [1 2 3 4 5 6 7 48 49 50 51 52 53 54]. FIG. 10 shows the BLER with different operating SNR in dB. In this case, the dedicated pilot signal scheme produces significant gain over common pilot signal only schemes. The gain is almost 0.7 -0.8 dB, hence power savings will be huge for LPN, which operates at low power compared to macro nodes.

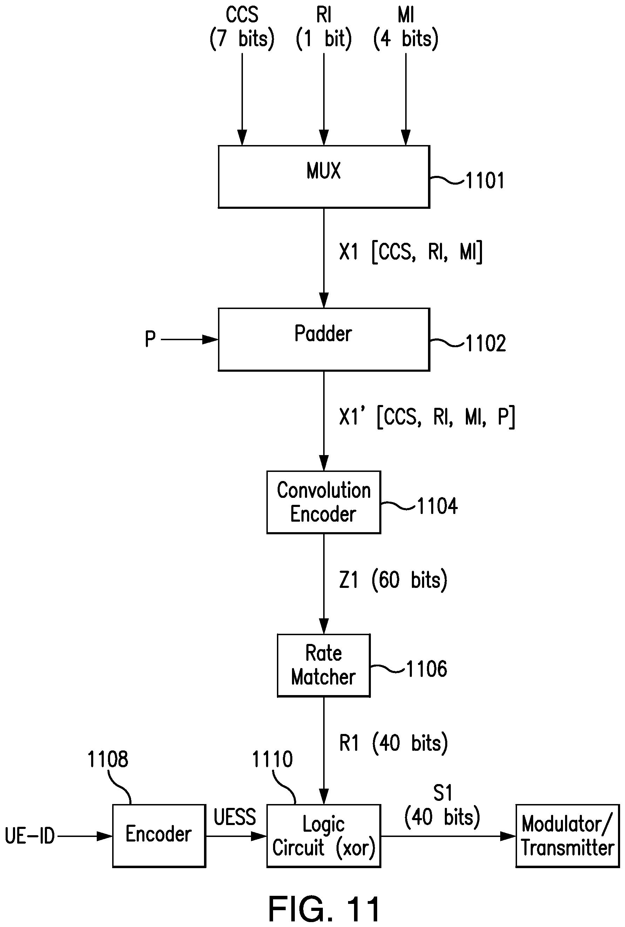

The encoder structure for example I is further illustrated in FIG. 11. As showing in FIG. 11, the part 1 information (i.e., CCS (7 bits), RI (1 bit) and modulation information (MI) (4 bits) are multiplixed (e.g. combined) by a multiplexer 1101 to produce bit sequence X1 (12 bits). X1 is then padded by padder 1102 with bit sequence P (P= 8 bits) to produce bit sequence X1' (X1'=20 bits). X1' is then encoded by a (40, 12) punctured convolutional code with rate 1/3. That is, X1' is encoded by a convolutional encoder 1104 to convolutionally encode X1' to produce encoded bits Z1 (60 bits). The encoded bits Z1 are then punctured by a rate matcher 1106 to produce bit sequence R1, where R1 is 40 bits in length. These encoded bits R1 are bit-masked with a UE specific sequence (UESS) (which may be generated by an encoder 1108 that encodes a 16-bit UE identifier (ID) using a (40, 16) punctured convolutional code with rate 1/2 to produce a 40 bit sequence S1. That is, UESS and R1 may be XORd by a logic circuit 1110. S1 is then spread by spreading factor 128, QPSK modulated, and transmitted in one slot. In one example, the following puncturing pattern is used by the rate matcher 1106: [1 2 3 4 5 6 7 8 9 10 51 52 53 54 55 56 57 58 59 60]. That is, bits 1, 2, 3, 4, 5, 6, 7, 8, 9, 10, 51, 52, 53, 54, 55, 56, 57, 58, 59, and 60 are removed from Z1 by rate matcher 1106 to produce R1.

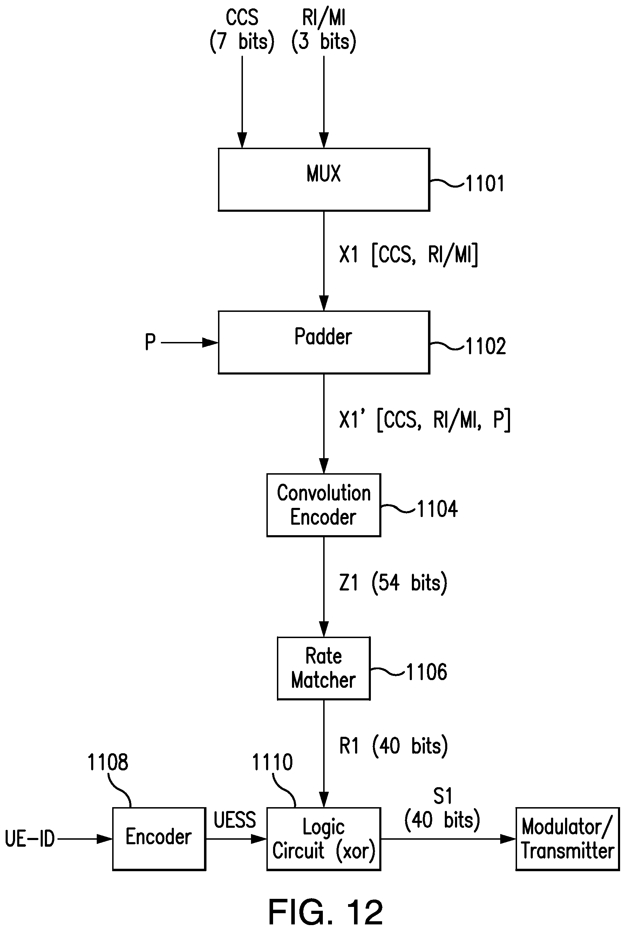

The encoder structure for embodiment I is further illustrated in FIG. 12. As showing in FIG. 12, the part 1 information (i.e., CCS (7 bits) and RI/MI (3 bits) are multiplexed (e.g. combined) by a multiplexer 1101 to produce bit sequence X1 (10 bits). X1 is then padded by padder 1102 with bit sequence P (8 bits) to produce bit sequence X1' (X1'=18 bits). X1' is then encoded by a (40, 10) punctured convolutional code with rate 1/3. That is, X1' is encoded by a convolutional encoder 1104 to convolutionally encode X1' to produce encoded bits Z1 (54 bits). The encoded bits Z1 are then punctured by a rate matcher 1106 to produce bit sequence R1, where R1 is 40 bits in length. These encoded bits R1 are bit-masked with a UE specific sequence (UESS) (which may be generated by an encoder 1108 that encodes a 16-bit UE identifier (ID) using a (40, 16) punctured convolutional code with rate 1/2 to produce a 40 bit sequence S1. That is, UESS and R1 may be XORd by a logic circuit 1110. S1 is then spread by spreading factor 128, QPSK modulated, and transmitted in one slot. In one embodiment, the following puncturing pattern is used by the rate matcher 1106: [1 2 3 4 5 6 7 48 49 50 51 52 53 54]. That is, bits 1, 2, 3, 4, 5, 6, 7, 48, 49, 50 51, 52, 53, and 54 are removed from Z1 by rate matcher 1106 to produce R1.

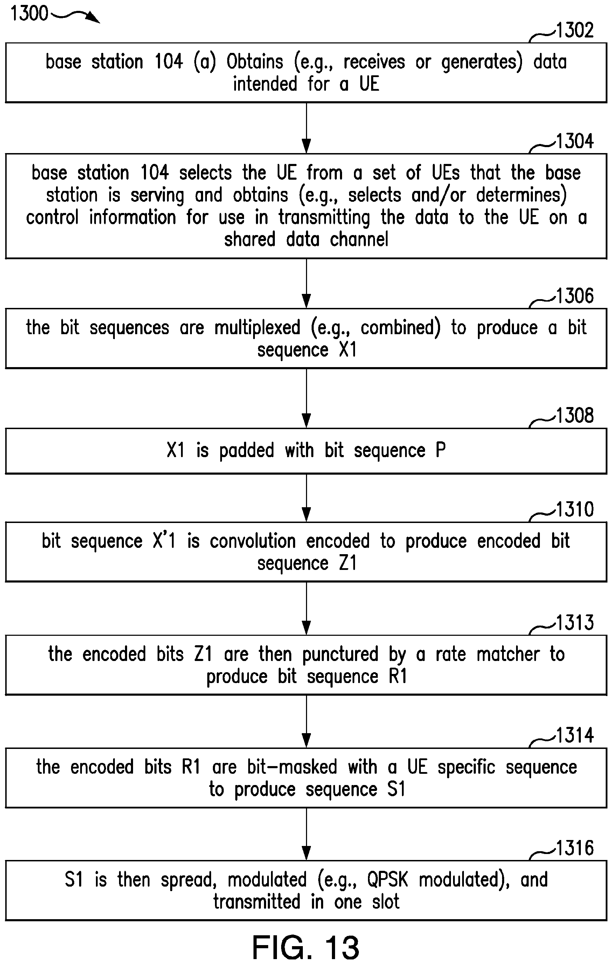

Referring now to FIG. 13, FIG. 13 is a flow chart illustrating a process 1300 according to some embodiments, which process may be performed by macro base station 104 or LPN 199. Process 1300 may begin in step 1302, where the base station obtains (e.g., receives or generates) data intended for a UE. In step 1304, the base station selects the UE from a set of UEs that the base station is serving and obtains (e.g., selects and/or determines) control information for use in transmitting the data to the UE on a shared data channel (e.g., HS-DSCH). The obtained control information may include: CCS, RI, and MI, where each has a corresponding bit sequence. In step 1306, the bit sequences are multiplexed (e.g., combined) to produce a bit sequence X1, (in some examples X1 is twelve bits and ten bits in other embodiments). As discussed above, in some embodiments (e.g., embodiment I), the first portion of X1 (e.g., the first seven bits of X1) identify a CCS the next (and last) portion of X1 (e.g., the last three bits) identify an RI/MI pair. Next (step 1308), X1 is padded with bit sequence P (in some embodiments P is eight bits in length) to produce bit sequence X1'. Next (step 1310) bit sequence X1' is convolution encoded to produce encoded bit sequence Z1. Next (step 1313) the encoded bits Z1 are then punctured by a rate matcher to produce bit sequence R1 (in some embodiments Z1 is punctured such that R1 is 40 bits in length). Next (step 1314) the encoded bits R1 are bit-masked with a UE specific sequence (UESS) (which may be generated by an encoder that encodes a 16-bit UE ID using a (40, 16) punctured convolutional code) to produce a bit sequence S1 (in some embodiments S1 = 40bits). For example, in some embodiments, UESS and R1 may be XORd by a logic circuit to produce S1. S1 is then spread (e.g., by spreading factor 138), modulated (e.g., QPSK modulated), and transmitted (e.g., transmitted in one slot) (step 1316).

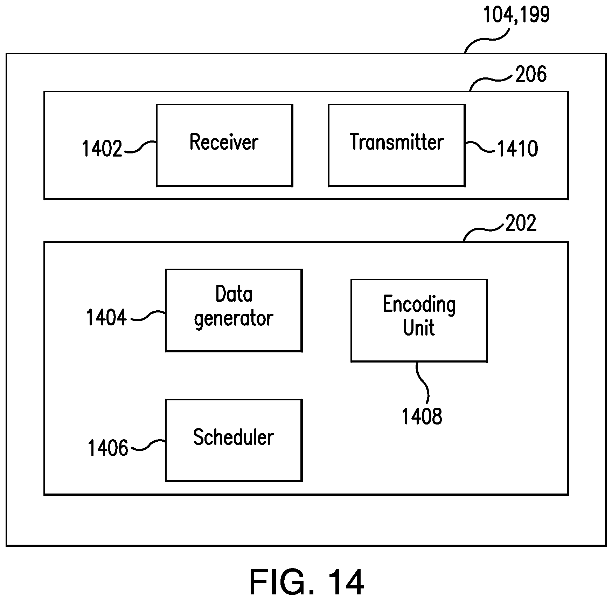

Referring now to FIG. 14, FIG. 14 is a functional block diagram of a base station 104, 199 according to some embodiments. As illustrated in FIG. 14, in some embodiments, the base station includes a receiver 1402 for receiving data intended for a UE and/or a data generator 1404 for generating data intended for the UE. The base station may further include a scheduler 1406 for selecting the UE from a set of UEs that the base station is serving and for obtaining (selecting and/or determining) control information for use in transmitting the received or generated data to the UE on a shared data channel (e.g., HS-DSCH). The control information selected/determined may include: CCS, RI, and MI, where each has a corresponding bit sequence. The base station further includes an encoding unit 1408 for, among other things, encoding the control information prior to transmission to the UE. As discussed above with reference to FIGs. 11 and 12, encoding unit 1408 may include a multiplexor 1101 for multiplexing the bit sequences to produce a bit sequence X1. Encoding unit 1408 may also include a padder 1102 that pads X1 with bit sequence P to produce bit sequence X1'. Encoding unit 1408 also includes a convolutional encoder 1104 that convolution encodes X1' to produce encoded bit sequence Z1. Encoding unit 1408 also includes a rate matcher configured to produce bit sequence R1 by puncturing bits Z1 (in some embodiments Z1 is punctured such that R1 is 40 bits in length). In some embodiments, encoding unit 1408 also includes a logic circuit 1110 configured to bit-mask R1 with a UE specific sequence (UESS) (which may be generated by an encoder 1108 that encodes a 16-bit UE ID using a (40, 16) punctured convolutional code with rate 1/2) to produce a bit sequence S1. For example, in some embodiments, UESS and R1 may be XORd by logic circuit to produce S1. The base station also includes a transmitter 1410 that then spreads, modulates and transmits S1 in one slot. Some or all of the above functional block, such as scheduler 1406 and encoding unit 1408 may be implemented in processor 202, and receiver 1402 and transmitter 1410 may be implemented in communication circuitry 206 (both described below).

Referring back to FIG. 1, network 100 is a network in which methods and apparatuses disclosed herein may be implemented. It should be noted, however, that the method and apparatuses disclosed herein may be implemented in other communication systems involving transmission of coded data between nodes.

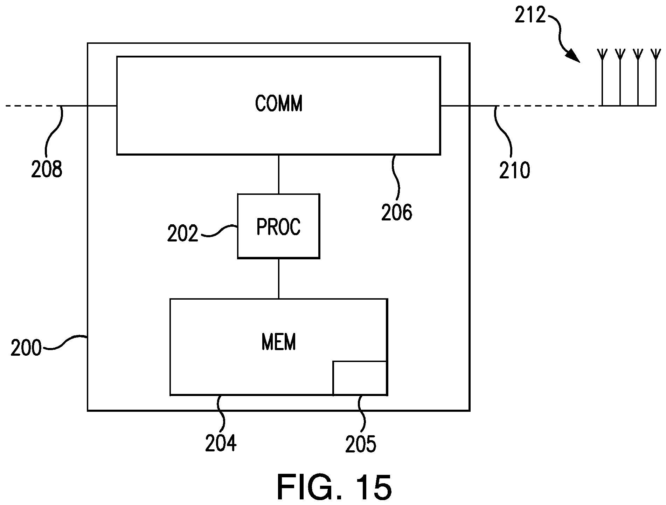

FIG. 15 is a functional block diagram that schematically illustrates base station 104, 199, according to some embodiments. In the embodiment of FIG. 15, the base station 104,199 represents a NodeB. The base station 104,199 may include processing means, memory means and communication means in the form of a processor 202, a memory 204 and communication circuitry 206. The base station 104,199 communicates with other nodes in via a first data path 208 and via a second data path 210. For example, the first data path 208 can be connected to a radio network controller (RNC) and the second data path 210 can connected to one or more antennas 212. The data paths 208, 210 can be any of uplink and downlink data paths, as the skilled person will realize.

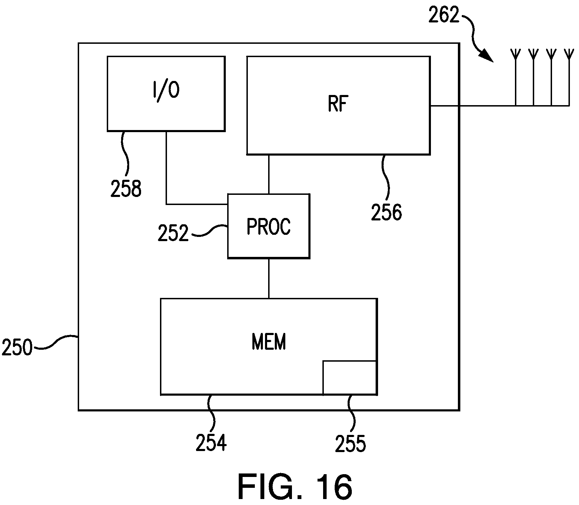

FIG. 16 is a functional block diagram that schematically illustrates UE 106, according to some embodiments. The UE 106 may include processing means, memory means and communication means in the form of a processor 252, a memory 254 and radio circuitry 256. The UE 106 communicates with other nodes via a radio air interface with the use of one or more antennas 262. The UE 106 also comprises input/output circuitry 258 in the form of, e.g., a display, a keypad, a microphone, a camera etc.

The methods described herein can be implemented in the base station 104,199 and the UE 106, respectively. In such embodiments, the method actions are realized by means of software instructions 205, 255 that are stored in the memory 204, 254 and are executable by the processor 202, 252. Such software instructions 205, 255 can be realized and provided in any suitable way, e.g. installed during manufacturing, as the skilled person will realize. Moreover, the memory 204, 254, the processor 202, 252, as well as the communication circuitry 206 and radio circuitry 256 comprise software and/or firmware that, in addition to being configured such that it is capable of implementing the methods to be described, is configured to control the general operation of the base station 104,199 and the UE 106, respectively, when operating in a cellular mobile communication system such as the system 100 in FIG. 1. However, for the purpose of avoiding unnecessary detail, no further description will be made in the present disclosure regarding this general operation.

### Advantages

The above described embodiments provide a concrete, technical advantage. As described above, embodiments concern the design of the downlink control channel where dedicated pilot signals are used for data demodulation. Because the dedicated pilot signals are precoded, the UE estimates the effective channel and the inventors recognized that a great improvement could be obtained by not signalling these precoding index bits, thereby saving power for downlink control channel, thus we can give more power to the data traffic channel and, thereby, increase the throughput. Furthermore, the embodiments may use end puncturing of bits (as described above) so that the optimal bit error rate (BER) performance can be achieved for downlink control channel when dedicated pilot signals are used.

### Conclusion

While various embodiments of the present invention have been described above, it should be understood that they have been presented by way of example only, and not limitation. Thus, the breadth and scope of the present invention should not be limited by any of the above-described exemplary embodiments and it is limited by the attached claims.

Additionally, while the processes described above and illustrated in the drawings are shown as a sequence of steps, this was done solely for the sake of illustration. Accordingly, it is contemplated that some steps may be added, some steps may be omitted, the order of the steps may be re-arranged, and some steps may be performed in parallel.

## Claims

1. A method performed by a base station (104) for encoding control information transmitted to a user equipment (106), UE, from the base station in a telecommunication system employing dedicated pilot signals which are precoded with beamforming matrices, the method comprising:
obtaining (1302) data for the UE (106);
obtaining (1304) control information for use in transmitting the data to the UE, the control information comprising: information identifying a channelization code set, CCS, rank information, RI, and modulation information, MI; and
multiplexing (1306) bit sequences corresponding to the control information, thereby producing a bit sequence, X1, **characterized in that**:
X1 is ten bits in length,
the first seven bits of X1 identify the CCS, and
the remaining three of the ten bits of X1 identify both the RI and MI.

2. The method of claim 1, further comprising:
padding (1308) X1 with a bit sequence, P, thereby producing a bit sequence, X1';
convolution encoding (1310) X1', thereby producing an encoded bit sequence, Z1; and
puncturing (1313) Z1, thereby producing a bit sequence, R1.

3. The method of claim 2, wherein
Z1 is fifty-four bits in length,
RI is forty bits in length, and
puncturing Z1 comprises puncturing Z1 using the puncturing pattern: [1 2 3 4 5 6 7 48 49 50 51 52 53 54].

4. The method of any one of claims 2 to 3, further comprising:
bit masking (1314) R1 with a sequence specific to the UE, thereby producing a bit sequence, S1;
transmitting (1316) S1 in one slot; and
spreading and modulating (1316) S1 prior to transmitting S1.

5. The method of claim 4, wherein bit masking R1 with the sequence specific to the UE comprises using a logic circuit to XOR R1 with the sequence specific to the UE.

6. A base station (104) configured to transmit dedicated pilot signals which are precoded with beamforming matrices to a user equipment (106), UE, the base station comprising:
a transmitter (1410); and
an encoding unit (1408) for encoding control information to send to the UE, the control information comprising: information identifying a channelization code set, CCS, rank information, RI, and modulation information, MI, **characterized in that** the encoding unit is configured to:
multiplex bit sequences corresponding to the control information, thereby producing a bit sequence, X1, wherein: X1 is ten bits in length, the first seven bits of X1 identify the CCS, and the remaining three of the ten bits of X1 identify both the RI and MI.

7. The base station of claim 6, **characterized in that** the encoding unit is further configured to:
pad X1 with a bit sequence, P, thereby producing a bit sequence, X1';
convolution encode X1', thereby producing an encoded bit sequence, Z1; and
puncture Z1, thereby producing a bit sequence, R1.

8. The base station of claim 7, wherein
Z1 is fifty-four bits in length,
RI is forty bits in length, and
the encoding unit is configured to puncture Z1 by puncturing Z1 using the puncturing pattern: [1 2 3 4 5 6 7 48 49 50 51 52 53 54].

9. The base station of any one of claims 7 to 8, **characterized in that** the encoding unit is further configured to bit mask RI with a sequence specific to the UE, thereby producing a bit sequence, S1; and the encoding unit is further configured to spread and modulate S1 prior to the transmitter being employed to transmit S1.

10. The base station of claim 9, wherein the sequence specific to the UE is an encoded sixteen bit UE identifier, ID.

11. The base station of any one of claims 9 to 10, wherein bit masking R1 with the sequence specific to the UE comprises using a logic circuit to XOR R1 with the sequence specific to the UE.

## Patentansprüche

1. Verfahren, durchgeführt von einer Basisstation (104), zum Codieren von Steuerinformationen, die von der Basisstation zu einem Anwendergerät (106), UE, in einem Telekommunikationssystem übertragen werden, das dedizierte Pilotsignale nutzt, die mit strahlformenden Matrizes vorcodiert werden, wobei das Verfahren umfasst:
Erhalten (1302) von Daten von dem UE (106);
Erhalten (1304) von Steuerinformationen zur Verwendung beim Übertragen der Daten zum UE, wobei die Steuerinformationen umfassen: Informationen, die eine Kanalisierungscodeliste, CCS, identifizieren, Ranginformationen, RI, und Modulationsinformationen, MI;
und
Multiplexen (1306) von Bitsequenzen, die den Steuerinformationen entsprechen, wodurch eine Bitsequenz, X1, erzeugt wird, **dadurch gekennzeichnet, dass**:
X1 zehn Bits lang ist,
die ersten sieben Bits von X1 die CCS identifizieren, und
die verbleibenden drei der zehn Bits von X1 sowohl die RI als auch die MI identifizieren.

2. Verfahren nach Anspruch 1, ferner umfassend:
Auffüllen (1308) von X1 mit einer Bitsequenz, P, wodurch eine Bitsequenz, X1', erzeugt wird;
Faltungscodieren (1310) von X1', wodurch eine codierte Bitsequenz, Z1, erzeugt wird; und
Punktieren (1313) von Z1, wodurch eine Bitsequenz, R1, erzeugt wird.

3. Verfahren nach Anspruch 2, wobei
Z1 vierundfünfzig Bits lang ist,
R1 vierzig Bits lang ist, und
Punktieren von Z1 Punktieren von Z1 unter Verwendung des Punktierungsmusters: [1 2 3 4 5 6 7 48 49 50 51 52 53 54] umfasst.

4. Verfahren nach einem der Ansprüche 2 bis 3, ferner umfassend:
Bitmaskieren (1314) von R1 mit einer für das UE spezifischen Sequenz, wodurch eine Bitsequenz, S1, erzeugt wird;
Übertragen (1316) von S1 in einem Slot; und
Verteilen und Modulieren (1316) von S1 vor dem Übertragen von S1.

5. Verfahren nach Anspruch 4, wobei Bitmaskieren von R1 mit der für das UE spezifischen Sequenz Verwenden einer Logikschaltung XOR an R1 mit der für das UE spezifischen Sequenz umfasst.

6. Basisstation (104), konfiguriert zum Übertragen dedizierter Pilotsignale, die mit strahlformenden Matrizes vorcodiert sind, an ein Anwendergerät (106), UE, wobei die Basisstation umfasst:
einen Sender (1410); und
eine Codierungseinheit (1408) zum Codieren von an das UE zu sendenden Steuerinformationen, wobei die Steuerinformationen umfassen: Informationen, die eine Kanalisierungscodeliste, CCS, identifizieren, Ranginformationen, RI, und Modulationsinformationen, MI,
**dadurch gekennzeichnet, dass** die Codierungseinheit konfiguriert ist zum:
Multiplexen von Bitsequenzen, die den Steuerinformationen entsprechen, wodurch eine Bitsequenz, X1, erzeugt wird, wobei: X1 zehn Bits lang ist, die ersten sieben Bits von X1 die CCS identifizieren, und die verbleibenden drei der zehn Bits von X1 sowohl die RI als auch die MI identifizieren.

7. Basisstation nach Anspruch 6, **dadurch gekennzeichnet, dass** die Codierungseinheit ferner konfiguriert ist zum:
Auffüllen von X1 mit einer Bitsequenz, P, wodurch eine Bitsequenz, X1', erzeugt wird;
Faltungscodieren von X1', wodurch eine codierte Bitsequenz, Z1, erzeugt wird; und
Punktieren von Z1, wodurch eine Bitsequenz, R1, erzeugt wird.

8. Basisstation nach Anspruch 7, wobei
Z1 vierundfünfzig Bits lang ist,
R1 vierzig Bits lang ist, und
die Codierungseinheit konfiguriert ist zum Punktieren von Z1 durch Punktieren von Z1 unter Verwendung des Punktierungsmusters: [1 2 3 4 5 6 7 48 49 50 51 52 53 54].

9. Basisstation nach einem der Ansprüche 7 bis 8, **dadurch gekennzeichnet, dass** die Codierungseinheit ferner konfiguriert ist zum Bitmaskieren von R1 mit einer für das UE spezifischen Sequenz, wodurch eine Bitsequenz, S1, erzeugt wird; und die Codierungseinheit ferner konfiguriert ist zum Verteilen und Modulieren von S1, bevor der Sender verwendet wird, um S1 zu übertragen.

10. Basisstation nach Anspruch 9, wobei die für das UE spezifische Sequenz eine codierte Sechzehnbit-UE-Kennung, ID, ist.

11. Basisstation nach einem der Ansprüche 9 bis 10, wobei Bitmaskieren von R1 mit der für das UE spezifischen Sequenz Verwenden einer Logikschaltung XOR an R1 mit der für das UE spezifischen Sequenz umfasst.

## Revendications

1. Procédé effectué par une station de base (104) pour coder des informations de commande transmises à un équipement utilisateur (106), UE, à partir de la station de base dans un système de télécommunication utilisant des signaux pilotes dédiés qui sont précodés avec des matrices de formation de faisceau, le procédé comprenant :
l'obtention (1302) de données pour l'UE (106) ;
l'obtention (1304) d'informations de commande pour l'utilisation dans la transmission des données à l'UE, les informations de commande comprenant : des informations identifiant un ensemble de codes de découpage en canaux, CCS, des informations de rang, RI, et des informations de modulation, MI ; et
le multiplexage (1306) de séquences de bits correspondant aux informations de commande, en produisant ainsi une séquence de bits, X1, **caractérisé en ce que** :
X1 a une longueur de dix bits,
les sept premiers bits de X1 identifient le CCS, et
les trois bits restants des dix bits de X1 identifient à la fois le RI et le MI.

2. Procédé selon la revendication 1, comprenant en outre :
le remplissage (1308) de X1 avec une séquence de bits, P, en produisant ainsi une séquence de bits, X1' ;
le codage convolutif (1310) de X1', en produisant ainsi une séquence de bits codée, Z1 ; et
la perforation (1313) de Z1, en produisant ainsi une séquence de bits, R1.

3. Procédé selon la revendication 2, dans lequel
Z1 a une longueur de cinquante-quatre bits,
R1 a une longueur de quarante bits, et
la perforation de Z1 comprend la perforation de Z1 en utilisant le modèle de perforation : [1 2 3 4 5 6 7 48 49 50 51 52 53 54].

4. Procédé selon l'une quelconque des revendications 2 à 3, comprenant en outre :
le masquage binaire (1314) de R1 avec une séquence spécifique à l'UE, en produisant ainsi une séquence de bits, S1 ;
la transmission (1316) de S1 dans un intervalle ; et
l'étalement et la modulation (1316) de S1 avant de transmettre S1.

5. Procédé selon la revendication 4, dans lequel le masquage binaire de R1 avec la séquence spécifique à l'UE comprend l'utilisation d'un circuit logique à OU exclusif R1 avec la séquence spécifique à l'UE.

6. Station de base (104) configurée pour transmettre des signaux pilotes dédiés qui sont précodés avec des matrices de formation de faisceau à un équipement utilisateur (106), UE, la station de base comprenant :
un émetteur (1410) ; et
une unité de codage (1408) pour coder des informations de commande à envoyer à l'UE, les informations de commande comprenant : des informations identifiant un ensemble de codes de découpage en canaux, CCS, des informations de rang, RI, et
des informations de modulation, MI, **caractérisée en ce que** l'unité de codage est configurée pour :
multiplexer des séquences de bits correspondant aux informations de commande, en produisant ainsi une séquence de bits, X1, dans laquelle : X1 a une longueur de dix bits, les sept premiers bits de X1 identifient le CCS, et les trois bits restants des dix bits de X1 identifient à la fois le RI et le MI.

7. Station de base selon la revendication 6, **caractérisée en ce que** l'unité de codage est configurée en outre pour :
remplir X1 avec une séquence de bits, P, en produisant ainsi une séquence de bits, X1' ;
effectuer le codage convolutif de X1', en produisant ainsi une séquence de bits codée, Z1 ; et
perforer Z1, en produisant ainsi une séquence de bits, R1.

8. Station de base selon la revendication 7, dans laquelle
Z1 a une longueur de cinquante-quatre bits,
R1 a une longueur de quarante bits, et
l'unité de codage est configurée pour perforer Z1 en perforant Z1 en utilisant le modèle de perforation : [1 2 3 4 5 6 7 48 49 50 51 52 53 54].

9. Station de base selon l'une quelconque des revendications 7 à 8, **caractérisée en ce que** l'unité de codage est configurée en outre pour effectuer le masquage binaire de R1 avec une séquence spécifique à l'UE, en produisant ainsi une séquence de bits, S1 ; et l'unité de codage est configurée en outre pour étaler et moduler S1 avant que l'émetteur soit utilisé pour transmettre S1.

10. Station de base selon la revendication 9, dans laquelle la séquence spécifique à l'UE est un identificateur d'UE de seize bits codés, ID.

11. Station de base selon l'une quelconque des revendications 9 à 10, dans laquelle le masquage binaire de R1 avec la séquence spécifique à l'UE comprend l'utilisation d'un circuit logique à OU exclusif R1 avec la séquence spécifique à l'UE.
